Europäisches Patentamt

European Patent Office

Office européen des brevets

(11) Veröffentlichungsnummer: **0 260 340**
**A1**

## (12) EUROPÄISCHE PATENTANMELDUNG

(21) Anmeldenummer: 86112846.0

(22) Anmeldetag: 17.09.86

(51) Int. Cl.⁴: **G01V 3/08 , G01D 5/14**

Die Bezeichnung der Erfindung wurde geändert (Richtlinien für die Prüfung im EPA, A-III, 7.3).

(43) Veröffentlichungstag der Anmeldung:
**23.03.88 Patentblatt 88/12**

(84) Benannte Vertragsstaaten:
**AT BE CH DE FR GB IT LI LU NL SE**

(71) Anmelder: **MAURER, Ingo**
**Kaiserstrasse 47**
**D-8000 München 40(DE)**

(72) Erfinder: **Kowatsch, Hermann**
**Josef-Schwarz-Weg 11**
**D-8000 München 71(DE)**
Erfinder: **Maurer, Ingo**
**Kaiserstrasse 47**
**D-8000 München 40(DE)**

(74) Vertreter: **Kirschner, Klaus Dieter et al**
**Patentanwälte Kirschner & Grosse**
**Forstenrieder Allee 59**
**D-8000 München 71(DE)**

(54) **Steuereinrichtung mit einem Magnetfeldsensor.**

(57) Eine Steuereinrichtung zur Steuerung des Ausgangssignals einer elektrischen Schaltung weist einen Magnetfeldsensor 2 und einen magnetischen Körper 6 auf. Der Magnetfeldsensor 2 weist ein elektrisches Bauteil, nämlich eine Brückenschaltung aus magnetfeldabhängigen Widerständen, auf, deren Widerstandswert sich in Abhängigkeit von der Feldstärke eines an einer Stirnseite 4 des Magnetfeldsensors vorhandenen und sich ändernden Magnetfelds ändert. Der magnetische Körper 6 ist an der Stirnseite des Magnetfeldsensors 2 quer über die Stirnseite 4 verschiebbar gelagert. Durch Verschiebung des magnetischen Körpers 6 gegeniber dem Magnetfeldsensor 2 ändert sich der Widerstandswert des Magnetfeldsensors, und diese Widerstandsänderung wird in der elektrischen Schaltung zur Steuerung des Ausgangssignals verarbeitet.

*Fig.1*

# Steuereinrichtung

Die Erfindung betrifft eine Steuereinrichtung zur Steuerung des Ausgangssignales einer elektrischen Schaltung.

Um das Ausgangssignal einer elektrischen Schaltung, beispielsweise einer Schaltung mit einem elektronischen Transformator oder einer Dimmerschaltung, zu steuern, hat man bisher beispielsweise ein Drehpotentiometer verwendet, welches in der zu steuernden Schaltung integriert ist. Wenn die Schaltung in einem Gehäuse untergebracht ist, muß die Achse des Drehpotentiometers aus dem Gehäuse heausgeführt werden, damit sie von außen betätigbar ist. Wenn das Gerät mit der Schaltung in einer verschmutzen oder feuchten Atmosphäre verwendet wird, ist es erwünscht, daß Innere des Gehäuses gegen die Umgebung abzudichten. In diesem Fall muß die Achse des Drehpotentiometers bei der Durchführung durch das Gehäuse abgedichtet werden. Außendem steht die Achse oder der daran befestigte Betätigungsknopf aus dem Gehäuse hervor, so daß er auch gegen mechanische Beanspruchung, beispielsweise bei unsachgemäßer Behandlung des Geräte, geschützt werden muß.

Demgegenüber liegt der Erfindung die Aufgabe zugrunde, eine Steuereinrichtung anzugeben, bei der keine beweglichen Teile aus dem Gehäuse herausgeführt werden müssen, um die Steuereinrichtung betätigen zu können.

Dazu ist die erfindungsgemäße Steuereinrichtung gekennzeichnet durch einen Magnetfeldsensor mit einem elektrischen Bauteil, dessen Kennwert sich in Abhängigkeit von der Feldstärke eines an einer Stirnseite des Magnetfeldsensors vorhandenen und sich andernden Magnetfeldes ändert, und einen magnetischen Körper, der an der Stirnseite des Magnetfeldsensors quer über die Stirnseite verschiebbar gelagert ist, wobei die Änderung des Kennwertes des Magnetfeldsensors in der elektrischen Schaltung zur Steuerung des Ausgangssignals verarbeitet wird. Da eine mechanische Kopplung zwischen dem magnetischen Körper und dem Magnetfeldsensor nicht erforderlich ist, kann der Magnetfeldsensor in einem geschlossenen Gehäuse untergebracht werden, während der magnetische Körper auf der Außenseite des Gehäuses entlanggeführt wird.

Nach einer vorteilhaften Ausgestaltung der erfindungsgemäßen Steuereinrichtung ist der magnetische Körper plattenförmig ausgebildet, und seine dem Magnetfeldsensor zugewandte Grundfläche ist mindestens so groß, daß die Stirnseite des Magnetfeldsensors von der Grundfläche abdeckbar ist. Dadurch wird bei geringer Bauhöhe der Steuereinrichtung sichergestellt, daß der Magnetfeldsensor von seinem Minimum bis zu seinem Maximum ansteuerbar ist.

Nach einer weiteren vorteilhaften Ausgestaltung der erfindungsgemäßen Steuereinrichtung ist wenigstens eine Seite des magnetischen Körpers, die bei Verschiebung des magnetischen Körpers über die Stirnseite des Magnetfeldsensors bewegt wird, unter einem Winkel zur Bewegungsrichtung des magnetischen Körpers verlaufend angeordnet. Wenn die Seite des magnetischen Körpers, die bei Verschiebung des magnetischen Körpers über die Stirnseite des Magnetfeldsensors bewegt wird, unter einem rechten Winkel zur Bewegungsrichtung des magnetischen Körpers steht, steht als Verschiebeweg für den magnetischen Körper zwischen der Stellung, in der der Magnetfeldsensor nicht beeinflußt wird, und der Stellung, in der der Magnetfeldsensor maximal beeinflußt wird, praktische nur die Breite der Stirnfläche des Magnetfeldsensors zur Verfügung. Dadurch ist oft die gewünschte Feineinstellung des Ausgangssignals nur - schwer einstellbar. Wenn jedoch die betreffende Seite des magnetischen Körpers unter einem Winkel zur Bewegungsrichtung des magnetischen Körpers verläuft, steht ein entsprechend langerer Verschiebeweg zur Verfügung, so daß die Feineinstellung besser bewirkt werden kann.

Nach einer weiteren vorteilhaften Ausgestaltung der erfindungsgemäßen Steuereinrichtung verlaufen beide Seiten des magnetischen Körpers, die bei Verschiebung des magnetischen Körpers über die Stirnseite des Magnetfeldsensors bewegt werden, je unter einem Winkel zur Bewegungsrichtung des magnetischen Körpers. Damit kann bei Verschiebung des magnetischen Körpers in einer Bewegungsrichtung das Ausgangssignal sowohl von dem Minimum zum Maximum erhöht als auch vom Maximum zum Minimum wieder herabgesetzt werden.

Eine weitere vorteilhafte Ausgestaltung der erfindungsgemäßen Steuereinrichtung ist dadurch gekennzeichnet, daß der magnetische Körper in Draufsicht die Form eines gleichschenkligen Dreiecks hat und in Richtung der Grundseite des Dreiecks gegenüber dem Magnetfeldsensor bewegbar ist. Bei dieser Form des magnetischen Körpers wird das Ausgangssignal bei Verschiebung des magnetsichen Körpers in einer Bewegungsrichtung zunächst auf das Maximum erhöht und dann wieder auf das Minimum herabgesetzt.

Bei einer bevorzugten Ausführungsform der Steuereinrichtung hat der magnetische Körper in Draufsicht die Form eines Trapezes, wobei der magnetische Körper in Richtung der Grundseite des Trapezes gegenüber dem Magnetfeldsensor verschiebbar ist. Da die beiden schrägen Seite des Trapezes den gleichen Winkel zur Bewegungsrichtung des magnetischen Körpers bilden, wird das Ausgangssignal mit dem gleichen Anstieg vergrößert, wie es bei weiterer Verschiebung des magnetischen Körpers wieder verringert wird. Bei Errei chen der der Grundseite des Trapezes gegenüberliegenden, kürzeren Seite des Trapezes bleibt das Ausgangssignal so lange auf dem Maximum, bis bei einer entsprechenden Verschiebung der Magnetfeldsensor wieder in den Bereich der anschließenden schrägen Seite des Trapezes kommt.

Vorzugsweise ist der magnetische Körper eine magnetische Folie, die nach einer weiteren vorteilhaften Ausgestaltung derart magnetisiert ist, daß auf der einen Seite die magnetischen Nordpole und auf der anderen Seite die magnetischen Südpole liegen. In der praktischen Ausführung ist es unerheblich, ob die Nordpole oder Südpole der Stirnseite des Magnetfeldsensors gegenüberliegen. Jedenfalls hat eine solche Folie der Vorteil, daß die Steuereinrichtung mit minimaler Bauhöhe zu verwirklichen ist. Um eine entsprechende mechanische Stabilität der Folie und eine gute Handhabbarkeit der Folie beim Einbau zu erreichen, kann die Folie an der Grundseite des Trapezes verbreitert sein, wobei die Stirnseite des Magnetfeldsensors nur von einem Streifen der Folie überdeckt wird, der sich an die der Grundseite des Trapezes gegenüberliegende Seite anschließt.

Schließlich ist eine weitere vorteilhafte Ausgestaltung der Steuereinrichtung für ein elektrisches Fernbedienungsgerät zur Positionierung auf einer Auflagefläche, wobei das Fernbedienungsgerät ein Gehäuse und einen um das Gehäuse verlaufenden und gegenüber diesem beweglich gelagerten Gürtel umfaßt, der durch eine geradlinige, horizontale Betätigungsbewegung gegenüber dem Gehäuse verschiebbar ist, dadurch gekennzeichnet, daß der Magnetfeldsensor in dem Gehäuse und der magnetische Körper in dem Gürtel angeordnet ist, wobei der magnetische Körper durch Verschieben des Gürtels gegenüber dem Gehäuse über die Stirnseite des Magnetfeldsensors verschiebbar gelagert ist. Dieses Ausführungsbeispiel zeigt, wie die Steuereinrichtung in einem Gerät integriert werden kann, so daß die Steuereinrichtung einerseits ihre Steuerfunktion erfüllen kann und andererseits keine Durchführung von Betätigungselementen durch das Gehäuse nach außen erforderlich ist. Eine Durchführung von Steuerelementen aus dem Gehäuse hat sich gerade bei diesem Fernsteuergerät als problematisch erwiesen, weil der Gürtel sich vollständig um das Gehäuse herum erstreckt, so daß eine sichere Betätigung der Steuereinrichtung einerseits und ein Schutz der in dem Gehäuse befindlichen elektronischen Bauteile andererseits nur mit besonderen Maßnahmen zu verwirklichen ist.

Ein Ausführungsbeispiel der Erfindung wird nun anhand der beiliegenden Zeichnungen beschrieben. Es zeigen:

Fig. 1 eine schematische Darstellung des Magnetfeldsensors und des zugeordneten magnetischen Körpers;

Fig. 2 ein Fernbedienungsgerät, in dem die Steuereinrichtung mit dem Magnetfeldsensor Verwendung findet; und

Fig. 3 einen zum Teil weggebrochenen Schnitt durch das Fernbedienungsgerät nach Fig. 2 quer zur Bewegungsrichtung A des Fernbedienungsgeräts.

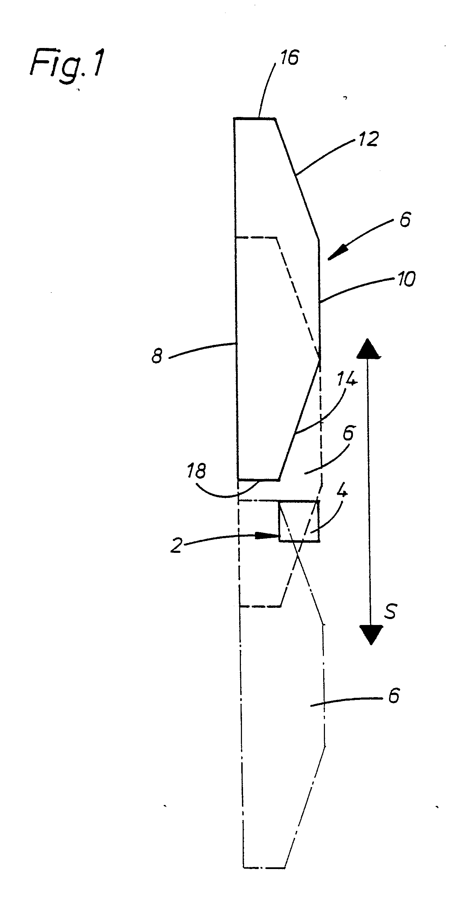

In Fig. 1 ist schematisch der Magnetfeldsensor 2 gezeigt, der beispielsweise in einer elektrischen Schaltung ortsfest angeordnet ist, so daß seine Stirnseite 4 eine im Raum fest definierte Lage hat. Der Magnetfeldsensor ist beispielsweise ein elektrisches Bauteil mit einer Brückenschaltung von Widerständen, deren Widerstandswert sich in Abhängigkeit von der Feldstärke eines an der Stirnseite des Magnetfeldsensors vorhandenen und sich ändernden Magnetfeldes ändert. Die Widerstandsänderung wird dann in einer elektrischen Schaltung zur Erzeugung des gewünschten Ausgangssignals verarbeitet. Derartige Magnetfeldsensoren sind beispielsweise unter der Kennzeichnung KMZ10B von der Firma Valvo erhältlich. Die Änderung des elektrischen Widerstandswertes der Brücke in Abhängigkeit von dem an der Stirnseite des Magnetfeldsensors vorhandenen Magnetfelds kann beispielsweise zur stufenlosen Leistungsregelung eines elektronischen Transformators verwendet werden.

Um ein nutzbares Steuersignal zu erhalten, wird bei der Steuereinrichtung das Magnetfeld an der Stirnseite des Magnetfeldsensors 4 durch einen magnetischen Körper 6 dadurch geändert, daß der magnetische Körper 6 parallel zur Ebene der Stirnfläche 4 verschiebbar gelagert ist. Bei Verschiebung des magnetischen Körpers 6 ändert sich das Magnetfeld, wobei die entsprechende Änderung des Widerstandswerts des Magnetfeldsensors 4 in der elektrischen Schaltung zu dem Steuersignal verarbeitet wird. Gemäß Fig. 1 ist der magnetische Körper 6 plattenförmig ausgebildet und hat die Grundform eines Trapezes mit einer lange Grundseite 8, einer dazu parallelen Seite 10 und zwei abgeschrägten Seiten 12, 14 die über zwei kurze Seiten 16, 18 in die Grundseite 12 übergehen. Der Abstand der Grundseite 8 von der gegenüberliegenden Seite 10 ist so gewählt, daß dieser Abstand minus der Länge der Seiten 16, 18 gleich der Länge einer Seitenkante der quadratischen Stirnfläche 4 des Magnetfeldsensors ist. Wenn der magnetische Körper 6 in Richtung des Pfeils S nach unten (wie Fig. 1) verschoben wird, bewegen sich die schräg verlaufenden Seiten 12, 14 über die Stirnfläche 4 des Magnetfeldsensors 2 und decken diese Stirnfläche je nach der Lage des magnetischen Körpers 6 gegenüber dem Magnetfeldsensor 2 ab. Wenn der magnetische Körper 6 aus der in Fig. 1 in ausgezogenen Linien dargestellten Lage, in der der magnetische Körper 6 den Magnetfeldsensor nicht beeinflußt, nach unten bewegt wird, wird die Stirnfläche 4 des Magnetfeldsensors 2 in zunehmenden Maße von der Kante des magnetischen Körpers entlang der 14 in zunehmendem Maße abgedeckt, so daß sich der Widerstandswert des Magnetfeldsensors entsprechend ändert. Bei der in Fig. 1 in gestrichelten Linien dargestellten Lage des magnetischen Körpers 6 deckt dieser die Stirnseite 4 des Magnetfeldsensors nahezu vollständig ab. Wird der magnetische Körper 6 weiter nach unten bewegt, wird die Stirnseite 4 vollständig von dem magnetischen Körper 6 abgedeckt. Die maximale Widerstandsänderung des Magnetfeldsensors ergibt sich aus der Lage des magnetischen Kör pers, bei der er den Magnetfeldsensor nicht beeinflußt, und der Lage des magnetischen Körpers 6, bei der die Stirnfläche 4 des Magnetfeldsensors vollständig abgedeckt ist. Wie ohne weiteres ersichtlich ist, ändert sich das Ausgangssignal des Magnetfeldsensors so lange nicht, wie die Seite 10 des magnetischen Körpers an ihm vorbeigeführt wird. Wenn der magnetische Körper 6 weiter nach unten bewegt wird, kommt die schräge Seite 12 des magnetischen Körpers 6 über die Stirnseite 4 des Magnetfeldsensors zu liegen, und bei weiterer Bewegung des magnetischen Körpers nimmt die Beeinflussung des Magnetfeldsensors durch den magnetischen Körper 6 wieder ab. In der in Fig. 1 strichpunktiert gezeigten Position des magnetischen Körpers 6 erfolgt nur eine geringfügige Beeinflussung des Magnetfeldsensors 4 durch den magnetischen Körper 6. Bei weiterer Bewegung des magnetischen Körpers 6 nach unten gelangt der magnetische Körper 6 schließlich in eine Lage, in der er den Magnetfeldsensor 2 nicht mehr beeinflußt. Mit der gerade beschriebenen Form des magnetischen Körpers 6 ist es daher beispielsweise möglich, eine an einen Transformator mit stufenloser Leistungsregelung angeschlossene Lampe derart zu steuern, daß ihre Helligkeit zunächst bis zum Maximum zunimmt, wenn der magnetische Körper 6 mit der Seite 14 über die Stirnfläche 4 geführt wird, daß die Helligkeit gleichbleibt, während die Stirnfläche 4 sich an der Seite 10 entlang bewegt, und schließlich wieder von maximaler Helligkeit auf Null abnimmt, wenn die - schräge Seite 12 über die Stirnfläche 4 geführt wird.

Die Form des magnetischen Körpers 6 in Draufsicht kann ersichtlich den gewünschten Erfordernissen bei der Steuerung einer elektrischen Komponente angepaßt werden. Beispielsweise kann der magnetische Körper 6 in Draufsicht die Form eines gleichschenkligen Dreiecks haben, dessen lange Grundseite so gegenüber dem Magnetfeldsensor 2 orientiert ist wie die Grundseite 8 der in Fig. 1 gezeigten Trapez form. Wenn der magnetische Körper die Form eines solchen Dreiecks hat, entfällt die Phase, bei der die elektrische Komponente, beispielsweise die Lampe, trotz Verschiebung des magnetischen Körpers mit gleicher Helligkeit brennt. Im übrigen wird die Länge der schrägen Seiten 12, 14 des magnetischen Körpers 6 darauf abgestimmt, wie lange der Verschiebeweg sein soll, innerhalb dessen das Ausgangssignal von einem Minimum auf ein Maximum gesteuert werden soll. Um den Magnetfeldsensor maximal auszunutzen, sollte die dem Magnetfeldsensor zugewandte Grundfläche des magnetischen Körpers mindestens so groß sein, daß die Stirnseite des Magnetfeldsensors von der Grundfläche abdeckbar ist.

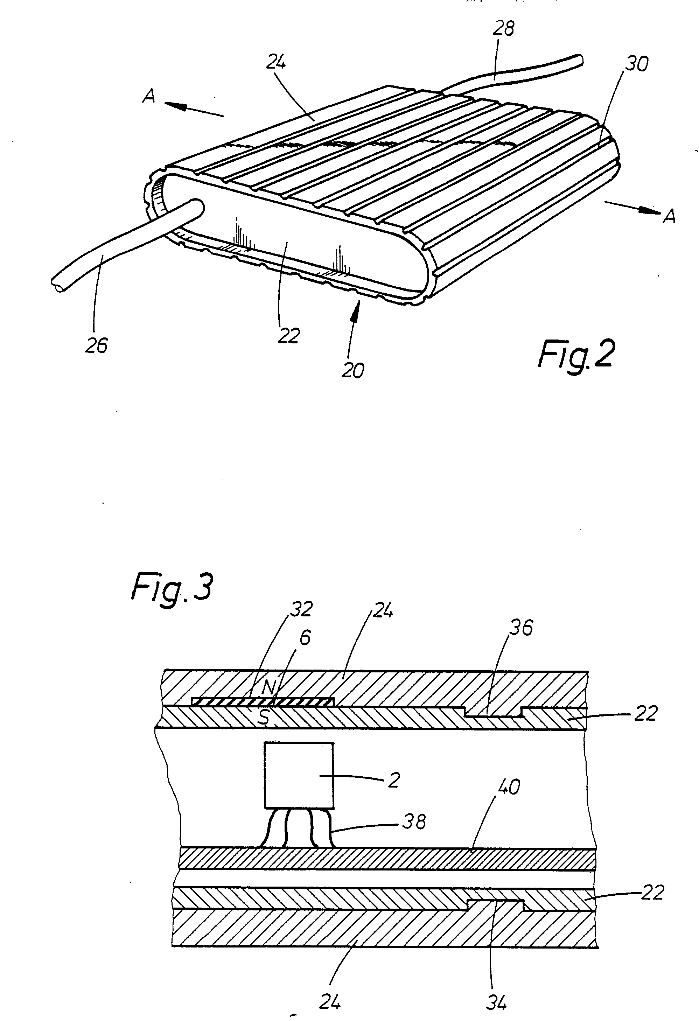

Das Material des magnetischen Körpers 6 richtet sich nach dem jeweiligen Anwendungsfall. Wenn die aus dem Magnetfeldsensor und dem magnetischen Körper bestehende Steuereinrichtung robust und widerstandsfähig gegen äußere Belastungen sein muß, kann der magnetische Körper aus einer Magnetplatte mit entsprechender mechanischer Festigkeit bestehen. In anderen Anwendungsfällen, bei denen der magnetische Körper durch Gehäuseteile oder dergleichen geschützt ist, ist es vorteilhaft, eine magnetische Folie für den magnetischen Körper zuverwenden, da dadurch die Bauhöhe der Steuereinrichtung auf ein Minimum herabgesetzt werden kann. Solche magnetischen Folien sind in verschiedenen Stärken von 0,3 bis 0,5 mm erhältlich. Für die Betätigung des obenerwähnten Magnetfeldsensors eignen sich magnetische Folien, die derart magnetisiert sind, daß auf der einen Seite die magnetischen Nordpole und auf der anderen Seite die magnetischen Südpole liegen. Der Bereich der Folie zwischen den Seiten 16,18 ist zur Stabilisierung und besseren Handhabung der Folie vorgesehen. In den Fig. 2 und 3 ist ein Anwendungsbeispiel der Steuereinrichtung gezeigt. Fig. 2 zeigt ein Fernsteuergerät 20 mit einem Gehäuse 22, einem das Gehäuse umgebenden Gürtel 24, einer Eingangsleitung 26 und einer Ausgangsleitung 28.

Der Gürtel 24 verläuft vollständig um das Gehäuse 22 herum und ist gegenüber diesem Gehäuse beweglich gelagert. Der Gürtel 24 dient einerseits als Auflagefeld für das Fernsteuergerät 20 auf einer Auflagefläche und an der Oberseite des Fernsteuergerätes 20 als Betätigungsfläche. Der Gürtel 24 hat auf der dem Gehäuse 22 abgewandten Seite ein Profil in Form von Rillen 30, die einerseits einer sicheren Führung auf der Auflagefläche dienen und andererseits der betätigenden Hand oder dem betätigenden Fuß ausreichenden Halt bieten. Das Profil auf der Außenseite des Gürtels 24 kann auch ein Rippen-oder Rautenprofil sein. Da das Gehäuse 22 des Fernbedienungsgeräts 20 länglich ausgebildet ist, verschiebt sich der Gürtel 24 gegenüber dem Gehäuse 22, wenn man mit dem Fuß oder mit der Hand versucht, das Fernsteuergerät auf einer Auflagefläche weiterzubewegen. Diese Relativbewegung des Gürtels 24 gegeniber dem Gehäuse 22 wird zur Betätigung einer in dem Gehäuse 22 untergebrachten elektrischen Schaltung, beispielsweise mit einem steuerbaren Transformator, ausgenutzt.

Bei der in Fig. 3 gezeigten Schnittdarstellung ist dargestellt, wie die Steuereinrichtung in das Fernbedienungsgerät integriert ist. Auf der Innenseite des Gürtels 24 befindet sich eine Ausnehmung 32, in der der magnetische Körper 6 in Form einer magnetischen Folie befestigt, beispielsweise eingeklebt ist. Das Gehäuse 22 hat eine umlaufende Nut 34, in die ein auf der Innenseite des Gürtels 24 angeordneter, entsprechend dimensionierter Wulst 36 eingreift. Damit ist sichergestellt, daß bei Verschiebung des Gürtels 24 um das Gehäuse 22 der magnetische Körper 6 entlang einer definierten Bahn oberhalb des Magnetfeldsensors 2 verschoben wird. Der Magnetfeldsensor 2 ist über seine Anschlußdrähte 38 mit einer Platine 40 verbunden, auf der auch die restliche Schaltung (nicht gezeigt) angeordnet ist. Durch die Montage auf der Platine 40 ist der Magnetfeldsensor 2 in einer definierten Lage gegenüber dem magnetischen Körper 6. Durch Verschieben des Gürtels 24 gegenüber dem Gehäuse ergibt sich somit die obenbeschriebene Relativbewegung zwischen dem magnetischen Körper 6 und dem Magnetfeldsensor, die dann in der elektronischen Schaltung zur Steuerung beispielsweise eines elektronischen Transformators ausgenutzt wird.

**Ansprüche**

1. Steuereinrichtung zur Steuerung des Ausgangssignals einer elektrischen Schaltung, **gekennzeichnet** durch

(1) einen Magnetfeldsensor (2) mit einem elektrischen Bauteil, dessen Kennwert sich in Abhängigkeit von der Feldstärke eines an einer Stirnseite (4) des Magnetfeldsensors vorhandenen und sich ändernden Magnetfeldes ändert, und

(2) einen magnetischen Körper (6), der an der Stirnseite des Magnetfeldsensors quer über die Stirnseite verschiebbar gelagert ist, wobei die Änderung des Kennwertes des Magnetfeldsensors in der elektrischen Schaltung zur Steuerung des Ausgangssignals verarbeitet wird.

2. Steuereinrichtung nach Anspruch 1, dadurch **gekennzeichnet**, daß der magnetische Körper (6) plattenförmig ausgebildet ist, und daß seine dem Magnetfeldsensor (2) zugewandte Grundfläche mindestens so groß ist, daß die Stirnseite (4) des Magnetfeldsensors von der Grundfläche abdeckbar ist.

3. Steuereinrichtung nach Anspruch 1 oder 2, dadurch **gekennzeichnet**, daß wenigstens eine Seite (14) des magnetischen Körpers (6), die bei Verschiebung des magnetischen Körpers über die Stirnseite (4) des Magnetfeldsensors (2) bewegt wird, unter einem Winkel zur Bewegungsrichtung des magnetischen Körpers verläuft.

4. Steuereinrichtung nach Anspruch 1 oder 2, dadurch **gekennzeichne** , daß beide Seiten (12,14) des magnetischen Körpers (6), die bei Verschiebung des magnetischen Körpers über die Stirnseite des Magnetfeldsensors (2) bewegt werden, je unter einem Winkel zur Bewegungsrichtung des magnetischen Körpers verlaufen.

5. Steuereinrichtung nach Anspruch 4, dadurch **gekennzeichnet**, daß der magnetische Körper in Draufsicht die Form eines gleichschenkligen Dreiecks hat und in Richtung der Grundseite des Dreiecks gegenüber dem Magnetfeldsensor bewegbar ist.

6. Steuereinrichtung nach Anspruch 4, dadurch **gekennzeichnet**, daß der magnetische Körper (6) in Draufsicht die Form eines Trapezes hat, wobei der magnetische Körper in Richtung der Grundseite (8) des Trapezes gegenüber dem Magnetfeldsensor (2) verschiebbar ist.

7. Steuereinrichtung nach einem der vorhergehenden Ansprüche, dadurch **gekennzeichnet**, daß der magnetische Körper eine magnetische Folie ist.

8. Steuereinrichtung nach Anspruch 7, dadurch **gekennzeichnet**, daß die Folie derart magnetisiert ist, daß auf der einen Seite die magnetischen Nordpole und auf der anderen Seite die magnetischen Südpole liegen.

9. Steuereinrichtung nach einem der vorhergehenden Ansprüche für ein elektrisches Fernbedienungsgerät zur Positionierung auf einer Auflagefläche, wobei das Fernbedienungsgerät ein Gehäuse und einen um das Gehäuse verlaufenden und gegenüber diesem beweglich gelagerten Gürtel umfaßt, der durch eine geradlinige, horizontale Betätigungsbewegung gegenüber dem Gehäuse verschiebbar ist,
dadurch **gekennzeichnet** ,
daß der Magnetfeldsensor (2) in dem Gehäuse (22) und der magnetische Körper (6) in dem Gürtel (24) angeordnet ist, wobei der magnetische Körper durch Verschieben des Gürtels (24) gegenüber dem Gehäuse (22) über die Stirnseite (4) des Magnetfeldsensors (2) verschiebbar gelagert ist.

0 260 340

Fig.1

16

12

6

10

8

14

6

18

2

4

S

6

*Fig.2*

*Fig.3*

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | DE-A-3 144 283  (VDO ADOLF SCHINDLING AG) <br> * Zusammenfassung; Figuren 1-3; Ansprüche 1-4 * | 1-5,7,8 | G 01 V   3/08 <br> G 01 D   5/14 |
| | --- | | |
| X | EDN, Band 25, Nr. 3, Februar 1980, Seiten 151-156, Deventer, NL; J.D.SPENCER: "Versatile Hall-effect devices handle movement-control tasks" <br> * Insgesamt * | 1,2,7-9 | |
| | --- | | |
| A | US-A-3 509 466  (W.T.LEMEN) | | |
| | --- | | |
| A | US-A-3 838 263  (J.HAEUSLER et al.) | | RECHERCHIERTE SACHGEBIETE (Int. Cl.4) |
| | --- | | |
| A | US-A-3 041 416  (F.KURT) | | G 01 R <br> G 01 V <br> G 01 D |
| | ----- | | |

Der vorliegende Recherchenbericht wurde für alle Patentansprüche erstellt.

| Recherchenort <br> DEN HAAG | Abschlußdatum der Recherche <br> 22-05-1987 | Prüfer <br> HAASBROEK J.N. |
|---|---|---|